Europäisches Patentamt

European Patent Office

Office européen des brevets

(11) Veröffentlichungsnummer: **0 232 794**
**B1**

(12) **EUROPÄISCHE PATENTSCHRIFT**

(45) Veröffentlichungstag der Patentschrift: **12.09.90**

(51) Int. Cl.⁵: **G 01 N 29/00**

(21) Anmeldenummer: **87101111.0**

(22) Anmeldetag: **27.01.87**

(54) Elektrodynamischer Wandler.

(30) Priorität: **01.02.86 DE 3603154**

(43) Veröffentlichungstag der Anmeldung:
**19.08.87 Patentblatt 87/34**

(45) Bekanntmachung des Hinweises auf die Patenterteilung:
**12.09.90 Patentblatt 90/37**

(84) Benannte Vertragsstaaten:
**DE FR GB IT**

(56) Entgegenhaltungen:
**DE-A-2 845 579**
**DE-A-3 314 377**
**GB-A-1 425 201**
**GB-A-1 524 955**

**PATENT ABSTRACTS OF JAPAN, Band 9, Nr. 259 (P-397) 1982r, 17. Oktober 1985; & JP - A - 60 108 749 (MITSUBISHI DENKI K.K.) 14.06.1985**

(73) Patentinhaber: **Nukem GmbH**
**Rodenbacher Chaussee 6 Postfach 11 00 80**
**D-6450 Hanau 11 (DE)**

(72) Erfinder: **Hüschelrath, Gerhard, Dr.**
**Beethovenstrasse 6**
**D-8752 Laufach-Frohnhofen (DE)**
Erfinder: **Kowol, Ewald**
**Jahnstrasse 24**
**D-6393 Wehrheim (DE)**
Erfinder: **Wüstenberg, Hermann**
**Beuckestrasse 20**
**D-1000 Berlin 37 (DE)**
Erfinder: **Mayer, Norbert, Dipl.-Phys.**
**Parallelstrasse 14b**
**D-1000 Berlin 45 (DE)**

(74) Vertreter: **Stoffregen, Hans-Herbert, Dr. Dipl.-Phys. et al**
**Patentanwälte Strasse & Stoffregen Salzstrasse 11a Postfach 2144**
**D-6450 Hanau/Main 1 (DE)**

Courier Press, Leamington Spa, England.

**Beschreibung**

Die Erfindung bezieht sich auf einen elektrodynamischen Wandler zur zerstörungsfreien Prüfung von Werkstücken sphärischer Geometrie wie Zylindern mittels Ultraschall umfassend einen Magneten wie Elektromagneten mit dem Werkstück zugewandter Erreger- und Empfangsspule, wobei zur Einstellung eines Abstandes zwischen dem Wandler und dem Werkstück ein Luftlager vorhanden ist, das durch aus in dem dem Werkstück zugewandten Bereich vorhandenen Öffnungen strömender Druckluft erzeugbar ist.

Um mit elektrodynamischen Wandlern eine zerstörungsfreie Prüfung von Werkstücken zu ermöglichen, die eine hohe Auflösung gewährleistet, muß sichergestellt sein, daß der elektrodynamische Wandler einen möglichst konstanten Abstand zum Prüfling aufweist, und zwar unabhängig von den starken im Prüfbetrieb noch erheblich schwankenden Magnetkräften und etwaigen Unebenheiten oder Dimensionsschwankungen des Prüflings selbst. So ist es z.B. aus der DE—A1—33 14 377 bekannt, die Prüfspulen des elektrodynamischen Wandlers auf der Oberfläche des zu überprüfenden Werkstückes über einen Abstandshalter abzustützen. Bei großen Unstetigkeiten auf der Oberfläche treten jedoch Schläge auf, die nicht derart von den Abstandshaltern aufgefangen werden können, daß die Abstandskonstanz gewährleistet ist.

Ein elektrodynamischer Wandler der eingangs genannten Art ist der GB—A—14 25 201 zu entnehmen. Von einer scheibenförmigen Grundfläche des elektrodynamischen Wandlers strömt Druckluft in den Bereich zwischen dem Wandler und dem zu überprüfenden Werkstück, um so ein Luftkissen zu erzeugen. Eine solche Konstruktion ist erkennbar nicht für sphärische Formen wie z.B. Zylinder möglich, da nur vertikale Führungskräfte auftreten, oder nur dann, wenn eine starre Führung des Lagers und des Prüflings gewährleistet ist. Bei einer Rohrprüfung lassen sich entsprechende Lager jedoch nicht verwenden, da allein durch die Fertigungstoleranzen Spalte entstehen, die die Lagerwirkung stark beeinträchtigen oder gar total verhindern.

Aufgabe der vorliegenden Erfindung ist es, einen elektrodynamischen Wandler der eingangs genannten Art so auszubilden, daß eine Lagerung mittels eines Luftkissens derart erfolgt, daß eine stabile Führung auf dem zu überprüfenden Werkstück möglich ist, wobei sichergestellt ist, daß der Abstand zwischen dem Wandler und dem Werkstück im gewünschten Umfang auch dann gleich bleibt, also der Wandler der Oberflächengeometrie folgt, wenn das Werkstück Unebenheiten aufweist und/oder während der Prüfung die Magnetkräfte schwanken.

Die Aufgabe wird erfindungsgemäß dadurch gelöst, daß der dem Werkstück zugewandte Bereich des Wandlers zumindest abschnittsweise der Außengeometrie des Werkstückes angepaßt ist und daß über zumindest zwei unabhängig voneinander mit Druckluft beaufschlagbaren Reihen von Öffnungen vertikale und horizontale Lagerkräfte erzeugbar sind. Im Gegensatz zum Stand der Technik erfolgt die erfindungsgemäße Lagerung dadurch, daß neben den bekannten z.B. aus der GB—A—14 25 201 benutzten vertikalen Kräften auch horizontale Komponenten eingesetzt werden und daß durch die teilweise Anpassung der Geometrien aufeinander eine hinreichend große Stütz- bzw. Führungsfläche vorliegt. Hierdurch kann der Wandler der z.B. Abweichungen aufweisenden Außengeometrie des Werkstückes folgen, so daß gewährleistet ist, daß ein gewünschter Abstand zwischen Wandler und Werkstück während einer Messung beibehalten wird.

Die vertikalen Lagerkräfte können über zumindest eine in etwa senkrecht zur Längachse des Werkstückes verlaufende Reihe von Öffnungen erzeugt werden. Vorzugsweise sind jedoch zwei in diametralen Randbereichen des Wandlers angeordnete Reihen von Öffnungen vorgesehen, die auf einem Teilumfang eines Kreises angeordnet sein können, nämlich dann, wenn der Wandler selbst Zylinderform aufweist.

Die Öffnungen selbst können Bohrungen sein, deren Längsachse vorzugsweise unter einem Winkel von 45° gegen die Längsachse des Werkstückes geneigt ist, so daß hierdurch eine optimale Lagerung in vertikaler Richtung gewährleistet ist.

Die horizontalen Lagerkräfte werden ihrerseits über zwei unabhängig voneinander mit Druckluft versorgbaren in etwa parallel zur Längsachse des Werkstückes verlaufende Reihen von Öffnungen erzeugt, wobei die Öffnungen der Reihen in einer Ebene liegen. Die Öffnungen selbst werden ebenfalls durch Bohrungen gebildet, deren Längsachsen horizontal verlaufen.

Um auf einfache Weise die Öffnungen mit Druckluft zu versorgen, sind jene an im Wandlerkopf vorhandene Kammern angeschlossen, die ihrerseits über z.B. Druckminderer entkoppelte Zuleitungen von einer Druckquelle mit Druckluft beaufschlagbar sind.

Weitere Einzelheiten, Vorteile und Merkmale der Erfindung ergeben sich nicht nur aus den Ansprüchen, sondern auch aus der nachfolgenden Beschreibung eines in der Zeichnung dargestellten bevorzugten Ausführungsbeispiels.

Es zeigen:

Fig. 1 eine schematische Darstellung eines auf ein zylindrisches Werkstück ausgerichteten elektrodynamischen Wandlers in Vorderansicht,

Fig. 2 eine Detaildarstellung des Wandlers nach Fig. 1,

Fig. 3 einen Blick auf die linke Unterseite des Wandlers gemäß Fig. 1 und

Fig. 4 eine Unteransicht des Wandlers nach Fig. 1.

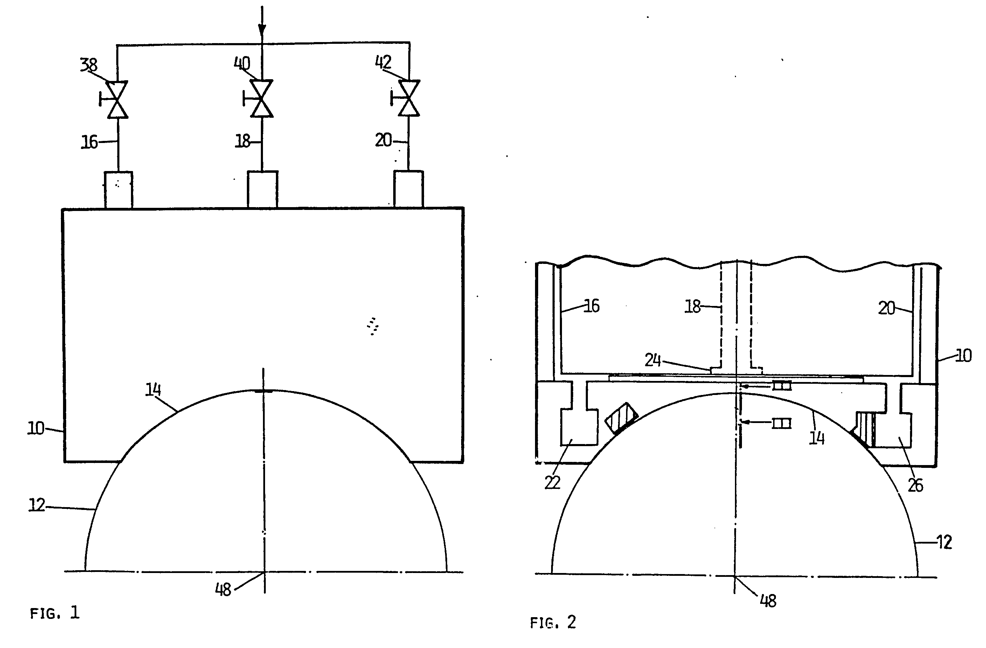

In Fig. 1 ist rein schematisch ein zylinderförmiger, also im Schnitt kreisförmiger elektrodynamischer Wandler (10) dargestellt, mittels dessen ein zylinderförmiges Werkstück (12) z.B. ein Rohr in bekannter Weise zerstörungsfrei auf Fehler und/oder Dimensionen überprüft werden soll.

2

Dabei ist der elektrodynamische Wandler in dem dem Werkstück (12) zugewandten Bereich (14) zumindest abschnittsweise an dessen Geometrie angepaßt. Im vorliegenden Fall wird demzufolge die dem Werkstück (12) zugewandte Seite des elektrodynamischen Wandlers (10) über einen Winkel von 110° im Bereich (14) der Oberfläche des Werkstückes (12) angepaßt. In dem Wandler (10) sind Leitungen (16), (18) und (20) vorgesehen, die in Kammern (22), (24) und (26) münden. Von den Kammern (22), (24) und (26) gehen nun in Reihen (28) bzw. (30) und (32) angeordnete Bohrungen (34), (44), (46) bzw. (36) aus, über die auf das Werkstück (12) Druckluft abgegeben wird, um zwischen dem Werkstück (12) und der Unterseite des Wandlers (10), also im Bereich (14), ein Luftkissen zu erzeugen, durch das der Wandler (10) im gewünschten Abstand zu der Oberfläche des Werkstückes (12) gehalten wird. Die Leitungen (16), (18) und (20) können dabei von einer nicht dargestellten gemeinsamen Druckluftquelle versorgt werden, wobei jedoch zwischen den Leitungen (16), (18) und (20) derart eine Entkopplung erfolgt, daß der Druck in den Kammern (22), (24) und (26) unabhängig voneinander eingestellt werden kann. Diese Entkopplung kann über in den Leitungen (16), (18) und (20) vorgesehene Druckminderer (38), (40) und (42) vorgenommen werden.

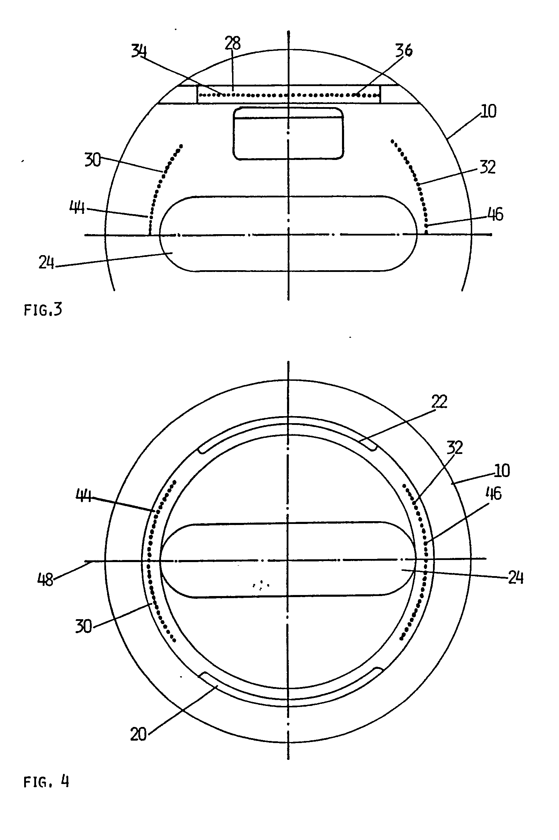

Wie insbesondere an Hand der Fig. 3 und 4 erkennbar wird, sind die von den Kammern (22), (24) und (26) ausgehenden Öffnungen derart auf das Werkstück (12) ausgerichtet, daß vertikal und horizontal gerichtete Kräfte wirken, um so eine selbstzentrierende Lagerung des Wandlers (10) auf dem Werkstück (12) sicherzustellen.

Die vertikalen Lagerkräfte werden durch die Druckluft hervorgerufen, die über die von der Kammer (24) ausgehenden Öffnungen (44) und (46) auf das Werkstück (12) abströmt. Dabei sind die Öffnungen (44) und (46) jeweils in einer Reihe, und zwar auf einem Teilkranz (30) und (32) angeordnet, der im Randbereich des elektrodynamischen Wandlers (12) und in etwa parallel zu dessen Umfangsfläche verläuft. Ferner sind die Teilkränze (30) und (32) im wesentlichen senkrecht zur Längsachse (48) des Werkstückes (12) ausgerichtet. Die Öffnungen (44) und (46) werden durch Bohrungen gebildet, deren Längsachse unter einem Winkel von vorzugsweise 45° gegen die Längsachse (48) des Werkstückes (12) gerichtet ist. Der Durchmesser der Bohrungen kann in etwa 0,5 mm betragen. Ferner sind bei einem Wandlerkopfdurchmesser von 130 mm vorzugsweise 63 Bohrungen (44) bzw. (46) pro Kranzteil (30) bzw. (32) vorgesehen.

Die Fig. 4 verdeutlicht, daß die Öffnungen (44) und (46) auf den Teilkränzen (30) und (32) angeordnet sind, die diametral zueinander und im Randbereich des Wandlers (10) verlaufen. Auch erkennt man in etwa die senkrechten Ausrichtungen der Kränze (30) bzw. (32) zu der Längsachse (48).

Mittels der Öffnungen bzw. Düsen (44) und (46) der Kränze (30) und (32) ergäbe sich noch keine geeignete Führung auf dem Werkstück (12), da ein Auswandern nach rechts oder links den Luftspalt an der entsprechenden Seite zwar vergrößert bzw. verkleinert, jedoch keinerlei Rückstellkräfte in horizontaler Richtung vorliegen.

Diese Rückstellkräfte werden nun durch die über die Öffnungen (34) und (36) von den Kammern (22) bzw. (26) abgegebene Druckluft hervorgerufen, über die im wesentlichen horizontale Kraftkomponenten erzeugt werden. Wie die Ansicht in Richtung der Linie III—III an der Unterseite des Wandlers (10) gemäß Fig. 2 zeigt, sind die von der Kammer (22) ausgehenden Öffnungen (34) entlang einer Geraden (28) angeordnet. So ergibt sich quasi ein Düsenlineal, das aus den Öffnungen (34), die ebenfalls aus Bohrungen bestehen, gebildet wird. Entsprechend sind die Öffnungen (36), die von der Kammer (26) ausgehen, linienförmig angeordnet. Die Richtung der Bohrungen (28) bzw. (36) ist horizontal, wodurch sich die horizontale Kraftkomponente beim Wechselwirken der Druckluft mit der Werkstückoberfläche ergibt. Die Durchmesser der Bohrungen (34) bzw. (36) betragen ebenfalls in etwa 0,5 mm. Bei einem Wandler des Durchmessers 130 mm gehen vorzugsweise von jeder Kammer (22) bzw. (26) hundert Düsen aus, d.h. insgesamt 100 Öffnungen (34) sind entlang der Geraden (28) angeordnet.

Erwähntermaßen sind die Kammern (22) bzw. (26) und damit die Öffnungen (34) bzw. (36) unabhängig voneinander mit Druckluft versorgbar. Treten nun beim Werkstück (12) Durchmesserschwankungen auf oder wandert das Werkstück seitlich aus, z.B. nach links, so würde im Ausführungsbeispiel das Düsenlineal (28) ein Folgen des Wandlerkopfes (10) in gleicher Richtung bei gleichzeitigem Nachlassen der Kraftwirkung hervorrufen, die von dem durch die Öffnung (36) nicht dargestellten Düsenkanal hervorgerufen wird. Die Kraftwirkungen werden durch die sich ändernden Luftspalte erzeugt.

Hierdurch ist gewährleistet, daß der elektrodynamische Wandler (10) durch die von den Kammern (22), (26), (24) stammende Druckluft und das aufgebaute Luftkissen auf dem Werkstück (12) gehalten wird, wobei die Abstandsvariation in vertikaler Richtung nur im Bereich von 0,1 bis 0,2 mm liegt, unabhängig davon, ob Dimensionsschwankungen oder Krümmungen im Werkstück vorliegen oder Schwankungen der Magnetkräfte des Elektromagneten des elektrodynamischen Wandlers (10) erfolgen, und in horizontaler Richtung eine Zentrierung des Wandlers auf die Werkstückmitte erfolgt.

Bei einem elektrodynamischen Wandler mit einem Durchmesser von 130 mm und einem Gewicht von etwa 20 kg kann sich unter Berücksichtigung der zuvor angegebenen Öffnungsdurchmesser und deren Anzahl ein Luftspalt von in etwa 0,2 mm zwischen dem Wandler (10) und Werkstück (12) einstellen, sofern ein Versorgungsdruck von $10^5$ Pa gegenüber Normaldruck herrscht. Diese Angabe erfolgt unter der Voraussetzung, daß die Magnetkraft 600 N nicht übersteigen kann.

## Patentansprüche

1. Elektrodynamischer Wandler zur zerstörungsfreien Prüfung von Werkstücken sphärischer Geometrie wie Zylindern mittels Ultraschall umfassend einen Magneten wie Elektromagneten mit dem Werkstück zugewandter Erreger- und Empfangsspule, wobei zur Einstellung eines Abstandes zwischen dem Wandler und dem Werkstück ein Luftlager vorhanden ist, das durch aus in dem dem Werkstück zugewandten Bereich vorhandenen Öffnungen strömender Druckluft erzeugbar ist, dadurch gekennzeichnet, daß der dem Werkstück (12) zugewandte Bereich (14) des Wandlers (10) zumindest abschnittsweise der Außengeometrie des Werkstückes (12) angepaßt ist und daß über zumindest zwei unabhängig voneinander mit Druckluft beaufschlagbare Reihen (28, 30, 32) von Öffnungen (34, 36, 44, 46) vertikale und horizontale Lagerkräfte erzeugbar sind.

2. Wandler nach Anspruch 1, dadurch gekennzeichnet, daß die vertikalen Lagerkräfte über zumindest eine in etwa senkrecht zur Längsachse (48) des Werkstückes (12) verlaufende Reihe (30; 32) von Öffnungen (44; 46) erzeugbar sind.

3. Wandler nach Anspruch 2, dadurch gekennzeichnet, daß die vertikalen Lagerkräfte über zwei in diametralen Randbereichen des Wandlers (10) angeordnete Reihen (30, 32) von Öffnungen (44, 46) erzeugbar sind.

4. Wandler nach Anspruch 3, dadurch gekennzeichnet, daß die Öffnungen (44, 46) Bohrungen sind, deren Längsachsen um in etwa 45° gegen die Längsachse (48) des Werkstückes (12) geneigt sind.

5. Wandler nach Anspruch 2, dadurch gekennzeichnet, daß die Öffnungen (44, 46) auf einem Teilumfang eines Kreises angeordnet sind.

6. Wandler nach Anspruch 1, dadurch gekennzeichnet, daß die horizontalen Lagerkräfte über zwei unabhängig voneinander mit Druckluft versorgbaren im wesentlichen parallel zu der Längsachse (48) des Werkstückes (12) verlaufenden Reihen (28) von Öffnungen (34, 36) erzeugbar sind.

7. Wandler nach Anspruch 6, dadurch gekennzeichnet, daß die Öffnungen (34, 36) der die horizontalen Lagerkräfte hervorrufenden Reihen (28) in einer Ebene liegen.

8. Wandler nach Anspruch 1, dadurch gekennzeichnet, daß die Öffnungen (34, 36, 44, 46) von im Wandler vorhandenen Kammern (22, 24, 26) ausgehen, die über z.B. Druckminderer (38, 40, 42) entkoppelte Zuleitungen (16, 18, 20) von einer Druckluftquelle mit Druckluft beaufschlagbar sind.

## Revendications

1. Convertisseur électrodynamique pour le contrôle non destructif de pièces à géométrie sphérique telles que des cylindres par des ultrasons, convertisseur comprenant un aimant ainsi que des électroaimants avec une bobine d'excitation et une bobine de réception tournées vers la pièce, et le réglage de la distance entre le convertisseur et la pièce se faisant par l'intermédiaire d'un palier à air créé par de l'air comprimé sortant des ouvertures de la zone tournée vers la pièce, caractérisé en ce que: la zone (14) du convertisseur (10) tournée vers la pièce (12) est adaptée au moins par segments à la géométrie extérieure de la pièce (12) et en ce que des forces de palier horizontales et verticales sont créées par au moins deux rangées (28, 30, 32) d'ouvertures (34, 36, 44, 46) alimentées indépendamment en air comprimé.

2. Convertisseur selon la revendication 1, caractérisé en ce que les forces de palier verticales sont créées par au moins une rangée (30, 32) d'ouvertures (44, 46) sensiblement perpendiculaires à l'axe longitudinal (48) de la pièce (12).

3. Convertisseur selon la revendication 2, caractérisé en ce que les forces de palier verticales sont créées par deux rangées (30, 32) d'ouvertures (44, 46) prévues dans des plages marginales, diamétrales du convertisseur (10).

4. Convertisseur selon la revendication 3, caractérisé en ce que les ouvertures (44, 46) sont des perçages dont les axes longitudinaux sont inclinés d'environ 45° par rapport à l'axe longitudinal (48) de la pièce (12).

5. Convertisseur selon la revendication 2, caractérisé en ce que les ouvertures (44, 46) sont réparties sur un arc de cercle.

6. Convertisseur selon la revendication 1, caractérisé en ce que les forces de palier horizontales sont créées par deux rangées (28) d'ouvertures (34, 36) alimentées indépendamment en air comprimé, rangées qui sont principalement parallèles à l'axe longitudinal (48) de la pièce (12).

7. Convertisseur selon la revendication 6, caractérisé en ce que les ouvertures (34, 36) des rangées (28) qui créent des forces de palier horizontales se situent dans un plan.

8. Convertisseur selon la revendication 1, caractérisé en ce que les ouvertures (34, 36, 44, 46) partent de chambres (22, 24, 26) existant dans le convertisseur et qui sont alimentées en air comprimé à partir d'une source d'air comprimé par des conduites d'alimentation (16, 18, 20) découplées par exemple par des réducteurs de pression (38, 40, 42).

## Claims

1. Electrodynamic transducer for non-destructive material testing of workpieces with spherical geometry, such as cylinders, by ultra-sonic means comprising a magnet such as an electro-magnet with excitation and receiver coils arranged adjacent to the workpiece, whereby an air bearing is provided to adjust the gap between the transducer and the workpiece, said air bearing being generatable by compressed air flowing out of ports in that region adjacent to the workpiece, characterized in that, the region (14) of the transducer (10) facing the workpiece (12) is adapted at least over a partial sector to the external geometry of the workpiece (12) and that vertical and horizontal bearing forces can be generated via at least two independently pressurizable rows (28, 30, 32) of ports (34, 36, 44, 46).

2. Transducer according to Claim 1, characterized in that, the vertical bearing forces can be generated via at least one row (30; 32) of ports (44; 46) running approximately perpendicularly to the longitudinal axis (48) of the workpiece (12).

3. Transducer according to Claim 2, characterized in that, the vertical bearing forces can be generated via two rows (30, 32) of ports (44, 46) in diametrically opposite peripheral regions of the transducer (10).

4. Transducer according to Claim 3, characterized in that, the ports (44, 46) are drilled holes the longitudinal axes of which are sloped at approximately 45° to the longitudinal axis (48) of the workpiece (12).

5. Transducer according to Claim 2, characterized in that, the ports (44, 46) are arranged in a semi-circle.

6. Transducer according to Claim 1, characterized in that, the horizontal bearing forces can be generated by two rows (28) of ports (34, 36), which can be individually supplied with compressed air and run primarily parallel to the longitudinal axis (48) of the workpiece (12).

7. Transducer according to Claim 6, characterized in that, the ports (34, 36) of the rows (28) generating the horizontal bearing forces lie in one plane.

8. Transducer according to Claim 1, characterized in that, the ports (34, 36, 44, 46) venting out of the chambers (22, 24, 26) in the transducer can be pressurized from a compressed air source through feed lines (16, 18, 20) which are decoupled, e.g., by pressure reducing valves (38, 40, 42).

FIG. 1

FIG. 2

FIG.3

FIG. 4